# EUROPÄISCHE PATENTSCHRIFT

(11) **EP 1 279 811 B1**
(45) Veröffentlichungstag und Bekanntmachung des Hinweises auf die Patenterteilung: **29.03.2006**
(21) Anmeldenummer: 02013048.0
(22) Anmeldetag: 13.06.2002
(51) Int. Cl.: F02D 9/10, F02M 35/10, F02B 29/08, F16K 15/03

(54) **Verschlussorgan, insbesondere für einen Saugkanal einer Brennkraftmaschine**
Closure member, suitable for the intake system of an internal combustion engine
Organe obturateur, approprié pour le conduit d'admission d'un moteur à combustion interne

(30) Priorität: 28.07.2001 DE 10136936
(43) Veröffentlichungstag der Anmeldung: 29.01.2003
(73) Patentinhaber: Mann + Hummel GmbH, 71638 Ludwigsburg (DE)
(72) Erfinder: Linhart, Jochen, 71332 Waiblingen (DE); Fasold, Michael, 71397 Leutenbach (DE)
(74) Vertreter: Voth, Gerhard

(56) Entgegenhaltungen:
- DD-A- 23 331
- DE-A- 4 423 370
- DE-B- 1 257 507
- US-A- 5 213 306
- PATENT ABSTRACTS OF JAPAN vol. 013, no. 052 (M-794), 7. Februar 1989 (1989-02-07) & JP 63 259274 A (CHUBU KOKI KK), 26. Oktober 1988 (1988-10-26)

## Beschreibung

### Stand der Technik

Die Erfindung betrifft ein Verschlussorgan für einen durchflossenen Querschnitt, welcher insbesondere aus einem Saugkanal für eine Brennkraftmaschine bestehen kann, nach dem Oberbegriff des Patentanspruches 1.

Verschlussorgane im allgemeinen wie auch im besonderen zur Verwendung im Ansaugtrakt von Brennkraftmaschinen sind allgemein bekannt. Für Brennkraftmaschinen ergibt sich eine besonders anspruchsvolle Verwendung für Klappen, wenn eine sogenannte Impulsaufladung erreicht werden soll. Zu diesem Zweck müssen schnell schaltende Klappen zur Realisierung kürzester Schaltzeiten eingesetzt werden. Entsprechend thermodynamisch angestellter Berechnungen sind hierbei Schaltzeiten von 2 ms zu verwirklichen. Aber auch bei anderen Anwendungen, beispielsweise in der Luft- und Raumfahrttechnik oder der Verfahrenstechnik, können schnell schaltende Klappen gefordert werden.

Die kurzen Schaltzeiten für die sogenannte Impulsaufladung von Brennkraftmaschinen ist notwendig, da das Schaltverhalten der Klappe an den Aufladungsprozess für die Zylinder angepasst werden muss, welcher direkt abhängig von den Ventilöffnungszeiten des Einlassventils des Zylinders ist. Unter der Impulsaufladung versteht man ein Verfahren, bei dem der Einlasskanal mittels einer Klappe stromaufwärts des Einlassventils des Zylinders zeitweilig verschlossen wird, so dass sich beim Ansaughub des Kolbens bei offenem Einlassventil stromabwärts der Klappe ein Unterdruck einstellt. Wenn die Klappe bei vorhandenem Unterdruck geöffnet wird, beschleunigt der Unterdruck die freigegebene Ladungssäule an Ansaugluft hinter der Klappe, wodurch diese mit hohem Impuls in den Brennraum einströmt und dort eine größere Füllung bewirkt. Dieses Verfahren ist beispielsweise in DE 199 08 435 A1 beschrieben.

Dieses Dokument stellt zur Verwirklichung dieses Verfahrens einen Klappenmechanismus vor, der in Schließrichtung vorgespannt ist, wodurch ein Verschluss der Klappe mit Hilfe eines Elektromagneten erfolgen kann. Geöffnet wird die Klappe aufgrund des Unterdrucks, der zwischen der Klappe und dem Einlassventil entsteht, in dem Bereich des Saugkanals, der als Speicherkanal bezeichnet wird.

Die beschriebene Schaltvorrichtung ist jedoch kompliziert im Aufbau und daher störanfällig. Außerdem kann der Klappenmechanismus nicht aktiv geöffnet werden, sondern wird durch den entstehenden Unterdruck aufgerissen. Hierdurch läßt sich kein genauer Schaltzeitpunkt erreichen, wodurch eine hinreichende Prozesssicherheit der Impulsaufladung nicht gewährleistet werden kann.

Das Dokument DE 1 257 507 B offenbart ein Ventil zum schlagartigen Absperren eines durchströmten Querschnitts. Das Ventil weist einen Ventilkörper auf, welcher sich auf einem konischen Ring abstützt. Der Ventilkörper und der Ring werden durch eine Welle bewegt. Beim Verschließen des Querschnitts trifft der Ring zuerst auf die Kanalstruktur des Strömungsquerschnitts auf. Durch große Kräfte in axialer Richtung wird der Ventilkörper, welcher eine konische Umfangsfläche hat, in den konisch ausgebildeten Ring gedrückt, wodurch der Ventilkörper auf dem konisch ausgebildeten Ring gleitet. Beim Öffnen des Ventils gleitet der Ventilkörper wieder in seine Ausgangslage zurück.

Das Verfahren der Impulsaufladung ist weiterhin in DE 197 54 287 A1 beschrieben. Der Figur 2, im Zusammenhang mit den entsprechenden Passagen der Beschreibung, läßt sich entnehmen, dass die zusätzliche Schaltklappe im Saugkanal für unterschiedliche Verfahren verwendet werden kann. Der Vorgang der Impulsaufladung entspricht der mit dem Bezugszeichen 11 versehenen Strategie des späten Einlassöffnens und frühen Einlassschließens. Es wird deutlich, dass zur Durchführung dieses Verfahrens extrem kurze Schaltzeiten notwendig sind, die durch die entsprechenden Rampen der Ventilhebungskurve 11 zum Ausdruck kommen. Im Vergleich hierzu sind im selben Schaubild die Ventilhebungskurven 6, 7 von Einlass- und Auslassventil dargestellt.

Zur schnellen Schaltung der Ventile wird im genannten Dokument weiterhin eine Vielzahl von Antriebsmechanismen dargestellt, die hauptsächlich auf elektromagnetischen Aktuatoren bzw. deren Kombination mit Federelementen beruhen. Diese ermöglichen ein enorm schnelles Reagieren, wodurch die im Dokument nicht näher ausgeführten Klappenmechanismen betätigt werden können. Als Klappenmechanismen werden sowohl Schieber als auch Drehklappen verwendet, wobei deren Anbindung an die elektromechanischen Aktuatoren nicht näher dargestellt sind.

Die gewöhnlichen Schaltklappen gemäß dem Stand der Technik sind jedoch auf die hohen Schaltgeschwindigkeiten, die sich mit den dargestellten Antrieben verwirklichen lassen, nicht ausgelegt. Hierbei entsteht im allgemeinen eine zu hohe Lagerreibung, so dass sich die geforderte Zahl an Schaltzyklen nicht ohne einen übermäßigen Verschleiß erreichen läßt. Außerdem führen die Schaltkräfte zu einer Verformung der Klappe, weswegen die geforderte Dichtheit im geschlossenen Zustand nicht in befriedigender Weise erreicht werden kann.

Aufgabe der Erfindung ist es daher, eine Schaltklappe zu schaffen, die die Verwirklichung enorm hoher Schaltzeiten ermöglicht. Diese Aufgabe wird durch die Merkmale des Patentanspruches 1 gelöst.

Aufgabe der Erfindung ist es daher, eine Schaltklappe zu schaffen, die die Verwirklichung enorm hoher Schaltzeiten ermöglicht. Diese Aufgabe wird durch die Merkmale des Patentanspruches 1 gelöst.

### Vorteile der Erfindung

Das erfindungsgemäße Verschlussorgan weist den grundsätzlich bekannten Aufbau, bestehend aus einer Schaltklappe und einer Anbindung für einen Aktuator zur Schaltung der selben auf. Gekennzeichnet ist das Verschlussorgan dadurch, dass die Schaltklappe mit einem elastischen Mittelbereich ausgestattet ist. Dieser Mittelbereich ist mit der Anbindung verbunden, so dass der Aktuator seine Kraft über diesen elastischen Mittelbereich auf die Schaltklappe überträgt. Weiterhin weist die Schaltklappe einen Randbereich auf, der im Vergleich zum Mittelbereich steifer ausgeführt ist. In diesem Bereich ist eine Dichtfläche vorgesehen, die zum Verschluss des durchflossenen Querschnittes mit einer entsprechenden Sitzfläche korrespondiert.

Der Vorteil des beschriebenen Klappenaufbaus liegt in einem flexiblen Toleranzausgleich, der durch den Mittelbereich der Klappe geschaffen wird. Dieser Toleranzbereich kann zum einen Fertigungstoleranzen der Einzelteile ausgleichen, so dass bei einem Verschluss der Klappe eine vollständige Dichtheit erreicht werden kann, indem die Dichtfläche der Klappe vollständig an die korrespondierende Sitzfläche angedrückt wird.

Der Toleranzbereich hat hinsichtlich der schnellen Schaltbarkeit der Klappe auch eine weitere Funktion. Diese trifft mit hoher Geschwindigkeit auf der Sitzfläche im Durchflussquerschnitt auf, so dass über die Elastizität des Mittelbereiches eine Dämpfung des Aufschlages erfolgt. Hierdurch läßt sich zum einen das beim Schließen der Klappe erzeugte Geräusch stark verringern, welches ansonsten einen unerwünschten Betrag zum Motorengeräusch liefern würde und hierdurch zu einer Überschreitung der geforderten Schallemmisionswerte für die Brennkraftmaschine führen würden. Außerdem lassen sich die an der Klappe auftretenden Belastungen auf diese Weise minimieren. Insbesondere die Lagerung der Klappe wird durch die Dämpfung des Aufschlages entlastet, so dass diese für die geforderte Anzahl von Schaltvorgängen ausgelegt werden kann.

Weiterhin kann ein Ausgleich der geforderten Anpresskraft zur Erreichung der Dichtung an der Sitzfläche erzeugt werden. Insbesondere, wenn der Schaltmechanismus der Klappe aufgrund seiner Geometrie in bezug auf die Schaltbewegung eine inhomogene Kraftverteilung auf die Dichtfläche der Schaltklappe ausübt, kann dies durch den elastischen Mittelbereich zumindest teilweise kompensiert werden.

Gemäß einer vorteilhaften Ausgestaltung der Erfindung wird der Unterschied in der Elastizität zwischen Mittelbereich und Randbereich der Klappe durch das Profil der Klappe selbst beeinflusst. Dies läßt sich beispielsweise durch eine dickere Wandstärke der Klappe im Randbereich erreichen, während der Mittelbereich der Klappe dünner ausgeführt ist. Hierdurch wird der Mittelbereich automatisch elastischer, wobei vorausgesetzt wird, dass der eingesetzte Werkstoff für die Klappe insgesamt den Anforderungen an die Elastizität gerecht wird. Unter diesen Voraussetzungen kann die gesamte Klappe besonders kostengünstig aus einem Werkstoff hergestellt werden, da durch die Materialverdickung am Klappenrand automatisch eine Versteifung aufgrund von deren Geometrie erreicht wird.

Mit der Elastizität des Mittelbereiches allgemein ist ein Werkstoffverhalten gemeint, welches mit Blick auf die Konzeption der Klappe ausreicht, um den geforderten Toleranzausgleich zu gewährleisten. Das Material selbst muss dabei nicht als Elastomer ausgeführt sein, vielmehr hängt die geforderte Elastizität von den Schaltzeiten der Schaltklappe, von der Leistung des Aktuators und von den Bauteiltoleranzen ab. Zur Anwendung kommen können selbstverständlich Werkstoffe aus der Gruppe der Elastomere, jedoch z. B. auch dünne Bleche, welche bei einer mittigen Anspannung hinsichtlich ihrer Federwirkung wie eine eingespannte Membran wirken.

Gemäß einer anderen vorteilhaften Ausgestaltung der Erfindung wird der Unterschied der Elastizität zwischen den Membranbereichen durch unterschiedliche Werkstoffe erreicht. Hierbei ist insbesondere ihre Steifigkeit als Werkstoffeigenschaft maßgeblich für den gewünschten, zu erreichenden Effekt. Die Werkstoffe erreichen dabei in ihrer Kombination das geforderte Ergebnis. Die Kombination kann durch alle bekannten Verbindungsverfahren erzeugt werden. Dabei sind Verklebungen und Verschweißungen genauso denkbar, wie Verschraubungen oder Vernietungen, je nach Größe der eingesetzten Klappen. Ein besonders vorteilhaftes Verfahren ergibt sich, wenn die Klappe in Mehrkomponententechnik hergestellt wird. Dies läßt sich beispielsweise durch Spritzgießen zweier Komponenten erreichen, wobei die Komponente im Randbereich steifer ausgeführt sein soll, wenn eine möglichst große Steifigkeit der Klappe gefordert ist. Soll die Dichtheit der Klappe gesteigert werden, kann der Randbereich zumindest im Bereich der Dichtfläche auch durch eine elastische Komponente gebildet werden.

Selbstverständlich kann eine Versteifung des Randbereiches der Klappe auch sowohl durch eine Kombination von Werkstoffen als auch durch eine entsprechende Gestaltung des Profils der Klappe gleichzeitig erzeugt werden. Dies läßt sich beispielsweise durch die Aufbringung eines Verstärkungsringes erzielen, der aus einem steiferen Material ist und gleichzeitig die Dicke des Randbereiches der Klappe vergrößert.

Gemäß einer weiteren vorteilhaften Ausgestaltung der Erfindung kann auch der Mittelbereich im Bereich der Anbindung versteift werden. Dies führt zu einer verbesserten Krafteinleitung von der Anbindung hinein in die Klappe. Gleichzeitig läßt sich das elastische Verhalten des Mittelbereiches der Klappe besser vorhersagen bzw. berechnen, da sich dieser als elastischer Bereich zwischen den beiden Einspannstellen am Rand bzw. in der Mitte ergibt.

Vorteilhafterweise besteht die Anbindung zumindest teilweise aus einer Welle, mit deren Hilfe die Schaltklappe in eine Drehbewegung versetzt werden kann. Diese Drehbewegung ermöglicht einen Wechsel der Klappe zwischen Offen- und Geschlossenstellung. Weitere Bauteile können die Anbindung ergänzen, so dass ein Verband zwischen Schaltklappe und Anbindung entsteht, der durch den Aktuator angesteuert werden kann.

Eine besonders vorteilhafte Ausgestaltung der Erfindung sieht vor, die Welle vollständig außerhalb der Dichtfläche der Schaltklappe anzuordnen. Diese kann dann mit Hilfe einer Brücke mit dem Mittelbereich der Schaltklappe verbunden werden. Die Brücke selbst ist drehsteif mit der Welle verbunden. Der wesentliche Vorteil dieser Ausbildung der Klappe besteht in einer ungestörten Wirkungsweise der Dichtfläche, da diese nicht durch die Klappenwelle durchlaufen wird. Auf diese Weise kann der bereits beschriebene Toleranzausgleich ungehindert wirken und eine Leckage durch die Durchstoßlöcher der Welle durch den Klappenrahmen kann vollständig ausgeschlossen werden.

Gemäß einer weiteren Ausgestaltung der Erfindung ist sowohl die Welle als auch die Klappe im geöffneten Zustand in einem Totraum angebracht, der an den durchflossenen Querschnitt angrenzt. Hiermit ist gemeint, dass der Totraum selbst nicht durch das Fluid durchflossen wird, so dass die Klappe im geöffneten Zustand, wenn sie sich im Totraum befindet, keinen Strömungswiderstand erzeugt.

Diese und weitere Merkmale von bevorzugten Weiterbildungen der Erfindung gehen au-βer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: das erfindungsgemäße Verschlussorgan in perspektivischer Ansicht und im Mittelprofil aufgeschnitten,
- Figur 2: das Verschlussorgan gemäß Figur in einer anderen perspektivischen Ansicht,
- Figur 3: ein zweiflügeliges Verschlussorgan im Mittelschnitt,
- Figur 4: das Verschlussorgan gemäß Figur 3 in perspektivischer Ansicht,
- Figur 5: den Schnitt durch das Profil eines Verschlussorgans gemäß einer alternativen Variante und
- Figur 6: das Verschlussorgan montiert in einem Saugrohr, schematisch im Schnitt.

### Beschreibung der Ausführungsbeispiele

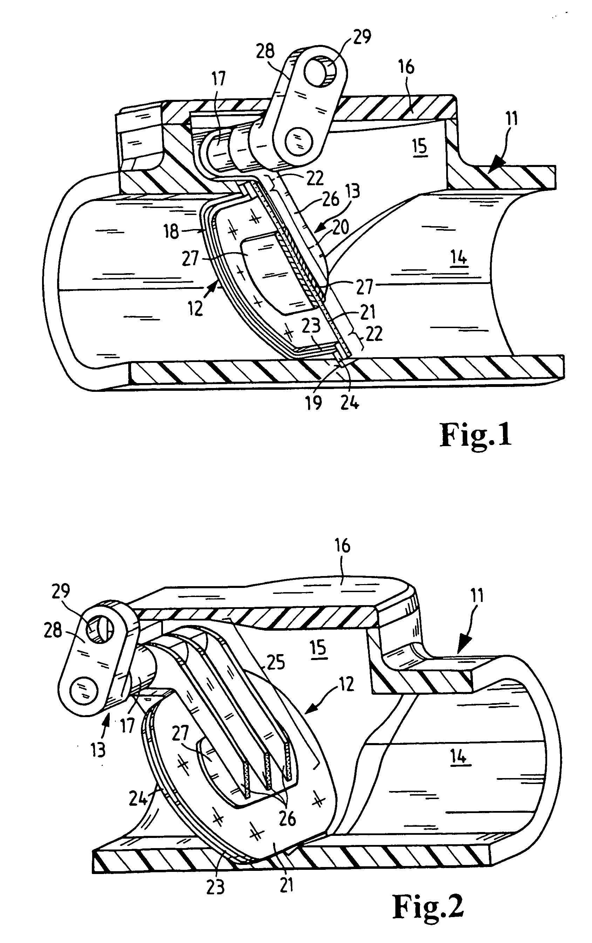

Das erfindungsgemäße Verschlussorgan gemäß Figur 1 weist als grundsätzliche Baugruppen eine Kanalstruktur 11, eine Schaltklappe 12 und eine Anbindung 13 auf, wobei die Anbindung zur Kraftübertragung der Schaltkraft von einem nicht dargestellten Aktuator auf die Klappe dient. Als Aktuatoren können alle schnell schaltenden Mechanismen verwendet werden, die je nach geforderter Schaltzeit ausgelegt werden müssen. Denkbar sind grundsätzlich Pneumatikzylinder oder Hochgeschwindigkeitsmotoren, die durch Magnetspulen angetrieber werden, wie sie beispielsweise in DE 197 54 287 A1 vorgeschlagen werden.

Die Kanalstruktur 11 umfasst einen Durchflussquerschnitt 14 z. B. für die durch die Brennkraftmaschine angesaugte Luft (Brennkraftmaschine nicht dargestellt) und einen Totraum 15, der sich jenseits des Durchflussquerschnittes befindet und durch einen Deckel 16 verschlossen wird.

Die Schaltklappe 12 ist im geschlossenen Zustand dargestellt. Um eine Welle 17 herum schwingt diese aus dem Totraum (nicht dargestellt) in den Durchflussquerschnitt 14 hinein, um mit Hilfe einer Dichtfläche 18 an der Klappe den Duchflussquerschnitt entlang einer Sitzfläche 19 im Durchflussquerschnitt abzudichten. Die Schaltklappe selbst weist einen elastischen Mittelbereich 20 auf, der beispielsweise durch eine Elastomermembran 21 gebildet wird. Je nach auftretenden Schaltkräften kann diese Membran alternativ auch aus Federstahl gefertigt sein. Als Elastomer kommen Werkstoffe wie z. B. NBR zum Einsatz.

Der Mittelbereich 20 der Schaltklappe ist durch einen Randbereich 22 umgeben, der durch einen auf die Elastomermembran 21 geklebten Verstärkungsring 23 aus Aluminium gebildet ist. Der Werkstoff Aluminium hat den Vorteil, dass bei großer Steifigkeit ein geringes Gewicht der Schaltklappe erreicht wird, was die Masseträgheit derselben verringert. Dies ist zur Erreichung hoher Schaltzeiten eine notwendige Voraussetzung. Weiterhin ist auf dem Verstärkungsring 23 ein Dichtring 24 angebracht. Dieser kann jedoch alternativ auch fest in der Kanalstruktur 11 montiert werden, um das Gewicht der Schaltklappe 12 noch weiter zu verringern. Je nachdem, ob der Dichtring an der Schaltklappe 12 oder in der Kanalstruktur 11 montiert ist, bildet er die Dichtfläche 18 bzw. die Sitzfläche 19 des dichtenden Verbandes.

Die Anbindung ist durch die Welle 17 gebildet, welche über eine Brücke 25 (siehe Figur 2) mit drei Rippen 26 mit dem Mittelbereich 20 der Schaltklappe 12 verbunden ist. Zu diesem Zweck ist beidseitig der Elastomermembran 21 jeweils eine Verstärkungsplatte 27 angebracht, von denen die eine direkt mit den Rippen 26 verbunden ist. Auf diese Weise läßt sich eine beanspruchungsgerechte Einleitung der Schaltkraft in die Elastomermembran 21 erzielen. Die Welle 17 weist außerdem einen Anlenkhebel 28 auf, der eine Gelenkbohrung 29 zur Aufnahme eines nicht dargestellten Aktuators besitzt.

In Figur 2 ist die Schaltklappe gemäß Figur 1 aus einer anderen Perspektive dargestellt. Die Bauteile sind baugleich. Zu erkennen sind die Rippen 26, welche über die Verstärkungsplatte 27 einen gleichmäßigen Druck auf die Elastomermembran 21 ausüben. Hierdurch läßt sich der Anpressdruck gleichmäßig auf die oval ausgeführte Schaltklappe 12 verteilen. Es wird also deutlich, dass die Schaltklappe nicht rund ist. Grundsätzlich sind alle möglichen Profile denkbar, weil die Sitzfläche senkrecht zur Bewegungsrichtung der Schaltklappe 12 kurz vor dem durch die Sitzfläche 19 gebildeten Anschlag im Durchflussquerschnitt gebildet ist.

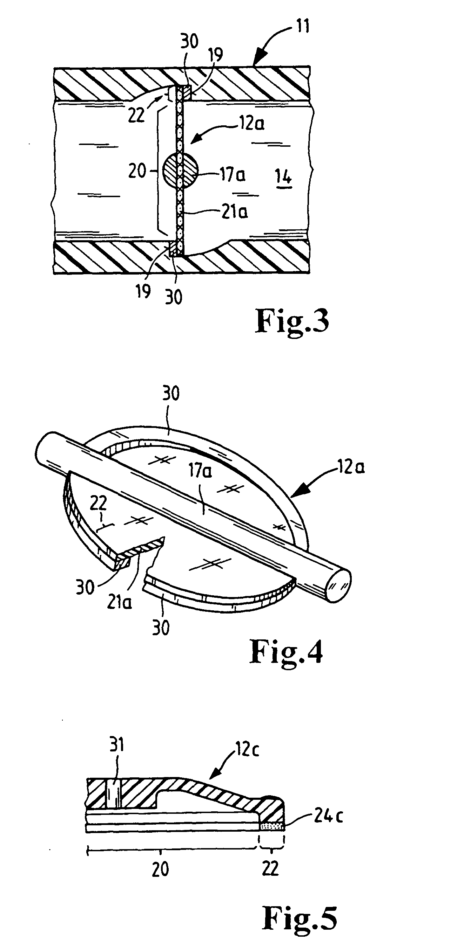

Gemäß Figur 3 kann die Schaltklappe 12a auch zweiflügelig gebildet werden. Dabei ist die Elastomermembran 21 a in der Mitte durch eine geschlitzte Welle 17a eingefasst. Zur Verstärkung des Randbereiches 22 sind im Ausführungsbeispiel gemäß Figur 3 zwei Halbringe 30 angebracht, die die bereits beschriebene Verstärkungswirkung aufweisen und mit den Sitzflächen 19 in der Kanalstruktur 11 kommunizieren.

Der Aufbau der Schaltklappe 12a läßt sich weiterhin Figur 4 genauer entnehmen. Es sind die Halbringe 30 zu erkennen, die jeweils am oberen bzw. unteren Randbereich 22 angebracht sind. Die Welle 17a weist einen Schlitz auf, in den die Elastomermembran 21a hineingeschoben ist. Zur Verbindung kann beispielsweise eine Verklebung verwendet werden.

Eine weitere Ausgestaltung der Schaltklappe ist Figur 5 zu entnehmen. Hier ist ein Profil der Schaltklappe 12c näher dargestellt, welche ersatzweise in eine Vorrichtung gemäß Figur 1 eingebaut werden könnte. Zur Aufnahme der Verstärkungsplatte 27 ist der Mittelbereich 20 der Schaltklappe 12c durch eine Verdickung verstärkt, wobei die Aufnahme über eine Öffnung 31 erfolgen kann. Der Mittelbereich ist ansonsten relativ dünnwandig ausgeführt, wobei sich im Randbereich 22 eine Materialverdickung ergibt, welche zu einer Versteifung desselben führt. Gleichzeitig ist in Mehrkomponententechnik ein Dichtring 24c integriert, der mit der Sitzfläche 19 gemäß Figur 1 kommunizieren würde, sofern das alternative Klappenprofil in eine Vorrichtung gemäß Figur 1 eingebaut würde. Der Dichtring selbst weist eine andere Elastizität auf, als die restliche Schaltklappe 12c, welche z. B. aus Kunststoff gefertigt sein kann. Der Dichtring trägt dabei als Nebeneffekt zu einer weiteren Verstärkung des Randbereiches 22 bei. Dies ist jedoch nicht seine Hauptaufgabe, sondern vielmehr eine zuverlässige Abdichtung auf der Sitzfläche 19 bzw. eine Dämpfung des Aufpralls der schnell schaltenden Klappe. Hauptsächlich wird die Verstärkung durch die Materialanhäufung im Randbereich 22 der Schaltklappe 12c erzielt.

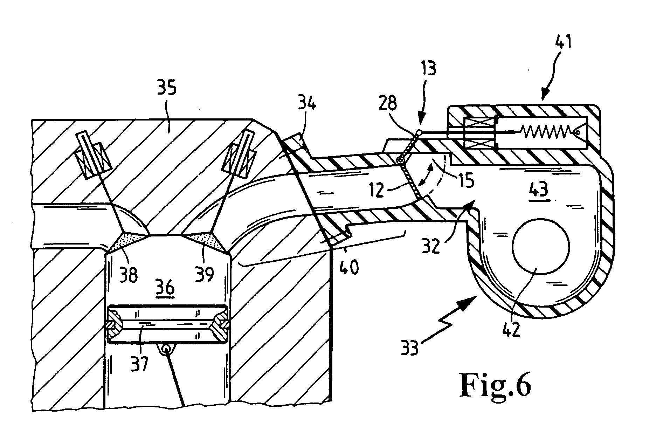

Zuletzt zeigt Figur 6 ein Einbaubeispiel für eine schnell schaltende Klappe 12, die schematisch dargestellt ist und gemäß Figur 1 aufgebaut sein kann. Diese ist in einen Saugkanal 32 einer Ansaugvorrichtung 33 eingebaut, wobei die Ansaugvorrichtung mittels eines Zylinderkopfflansches 34 an den Zylinderkopf einer Brennkraftmaschine angeschlossen ist. In dieser ist schematisch dargestellt ein Zylinder 36 mit einem Kolben 37, einem Auslassventil 38 und einem Einlassventil 39. Zwischen dem Einlassventil und der Schaltklappe 12 entsteht ein Speicherkanal 40, welcher zur Speicherung eines Unterdrucks zwecks der eingangs beschriebenen Impulsaufladung vorgesehen ist.

Das Saugrohr weist weiterhin einen elektromagnetischen Aktuator 41 auf, welcher über den Anlenkhebel 28 die Klappe entsprechend der angedeuteten Pfeile öffnet und schließt. Bei geöffneter Schaltklappe, welche dabei in dem Totraum 15 verschwindet, kann die Luft über einen Einlass 42 in einen Sammelraum 43 und von dort aus über den Saugkanal 32 und den Speicherkanal 40 in den Zylinder 36 strömen.

## Patentansprüche

1. Verschlussorgan für einen durchflossenen Querschnitt (14), insbesondere für einen Saugkanal einer Brennkraftmaschine, mit einer Schaltklappe (12) und einer an dieser angebrachten Anbindung (13) für einen Aktuator (41), wobei die Schaltklappe einen elastischen Mittelbereich (20) und einen im Vergleich zum Mittelbereich steifer ausgeführten Randbereich (22) aufweist, wobei der Randbereich (22) eine Dichtfläche (18) zum Verschluss des Durchflussquerschnitts (14) aufweist und die Anbindung (13) zur Kraftübertragung mit dem Mittelbereich (20) verbunden ist, **dadurch gekennzeichnet, dass** der Unterschied in der Elastizität zwischen Mittelbereich (20) und Randbereich (22) der Klappe durch eine Kombination von Werkstoffen unterschiedlicher Steifigkeit beeinflusst wird.

2. Verschlussorgan nach Anspruch 1, **dadurch gekennzeichnet, dass** die Schaltklappe (12) in Mehrkomponententechnik hergestellt ist.

3. Verschlussorgan nach Anspruch 1, **dadurch gekennzeichnet, dass** der Randbereich durch einen Verstärkungsring (23) versteift wird, der an der Schaltklappe (12) befestigt ist.

4. Verschlussorgan nach einem der vorherigen Ansprüche, **dadurch gekennzeichnet, dass** der Mittelbereich (20) im Bereich der Anbindung (13) versteift ist.

5. Verschlussorgan nach einem der vorherigen Ansprüche, **dadurch gekennzeichnet, dass** die Anbindung (13) zumindest teilweise aus einer Welle (17) besteht, die die Schaltklappe (12) zur Betätigung in eine Drehbewegung versetzt.

6. Verschlussorgan nach Anspruch 5, **dadurch gekennzeichnet, dass** die Welle (17) vollständig außerhalb der Dichtfläche (18) verläuft und mit Hilfe einer Brücke (25) mit dem Mittelbereich (20) der Schaltklappe (12) verbunden ist.

7. Verschlussorgan nach Anspruch 5, **dadurch gekennzeichnet, dass** die Welle (17) in einem Totraum (15) angeordnet ist, welcher an den Durchflussquerschnitt (14) angrenzt, und in den die Schaltklappe (12) in der geöffneten Stellung hineinschwenkt.

## Claims

1. Closing member for a traversed cross-section (14), more especially for an intake duct of an internal combustion engine, said closing member including a switching flap (12) and a connection (13) mounted on said switching flap for an actuator (41), wherein the switching flap includes a resilient central region (20) and an edge region (22), which compared to the central region, is more rigid, wherein the edge region (22) includes a sealing face (18) for closing the sectional area of flow (14) and the connection (13) is connected to the central region (20) for the transferring of force, **characterised in that** the difference in the resilience between the central region (20) and the edge region (22) of the flap is influenced by a combination of materials of varying rigidity.

2. Closing member according to claim 1, **characterised in that** the switching flap (12) is produced using a multi-component technique.

3. Closing member according to claim 1, **characterised in that** the edge region is stiffened by a strengthening ring (23), which is secured to the switching flap (12).

4. Closing member according to one of the preceding claims, **characterised in that** the central region (20) is stiffened in the region of the connection (13).

5. Closing member according to one of the preceding claims, **characterised in that** the connection (13) is produced at least partially from a shaft (17), which sets the switching flap (12) into a rotational movement for actuation.

6. Closing member according to claim 5, **characterised in that** the shaft (17) extends completely outside the sealing face (18) and is connected to the central region (20) of the switching flap (12) with the help of a bridge (25).

7. Closing member according to claim 5, **characterised in that** the shaft (17) is disposed in a dead space (15), which adjoins the sectional area of flow (14), and into which the switching flap (12) pivots in the open position.

## Revendications

1. Organe obturateur pour une section de passage (14), en particulier pour un conduit d'admission d'un moteur à combustion interne, comprenant un clapet de commutation (12) avec sur celui-ci un raccordement (13) pour un actionneur (41), le clapet de commutation présentant une zone médiane élastique (20) et une zone de bordure (22) rigide par rapport à la zone médiane, la zone de bordure (22) présentant une surface d'étanchéité (18) pour la fermeture de la section de passage (14) et le raccordement (13) étant relié à la zone médiane (20) pour la transmission des forces,
**caractérisé en ce que**
la différence d'élasticité entre la zone médiane (20) et la zone de bordure (22) du clapet est influencée par une combinaison de matériaux de différentes rigidités.

2. Organe obturateur selon la revendication 1,
**caractérisé en ce que**
le clapet de commutation (12) est fabriqué selon une technique multi-composants.

3. Organe obturateur selon la revendication 1,
**caractérisé en ce que**
la zone de bordure est rigidifiée par un anneau de renfort (23) fixé au clapet de commutation (12).

4. Organe obturateur selon l'une des revendications précédentes,
**caractérisé en ce que**
la zone médiane (20) est rigidifiée dans la zone du raccordement (13).

5. Organe obturateur selon l'une des revendications précédentes,
**caractérisé en ce que**
le raccordement (13) se compose au moins partiellement d'un arbre (17) qui déplace le clapet de commutation (12) dans un mouvement de rotation pour son actionnement.

6. Organe obturateur selon la revendication 5,
**caractérisé en ce que**
l'arbre (17) s'étend complètement à l'extérieur de la surface d'étanchéité (18) et est relié à la zone médiane (20) du clapet de commutation (12) à l'aide d'un pont (25).

7. Organe obturateur selon la revendication 5,
**caractérisé en ce que**
l'arbre (17) est disposé dans un espace mort (15) adjacent à la section de passage (14) et dans lequel le clapet de commutation (12) pivote dans la position ouverte.
